# EUROPEAN PATENT APPLICATION

(11) **EP 2 869 157 A2**
(43) Date of publication of application: **06.05.2015**
(21) Application number: 14191035.6
(22) Date of filing: 30.10.2014
(51) Int. Cl.: G05D 1/02, B25J 9/00

(54) **Mobile unit and method of moving mobile unit**

(30) Priority: 30.10.2013 JP 2013225972
(71) Applicant: Kabushiki Kaisha Yaskawa Denki, Kitakyushu-shi, Fukuoka 806-0004 (JP)
(72) Inventor: Shikina, Taku, Kitakyushu-shi, Fukuoka 806-0004 (JP); Nakamura, Tamio, Kitakyushu-shi, Fukuoka 806-0004 (JP); Kouno, Dai, Kitakyushu-shi, Fukuoka 806-0004 (JP); Nishimura, Takashi, Kitakyushu-shi, Fukuoka 806-0004 (JP)
(74) Representative: Grünecker Patent- und Rechtsanwälte PartG mbB

(57) **Abstract**

A mobile unit (100, 600) according to an embodiment includes a main body (101, 601), a moving mechanism (103), a sensor (102), a recognizer (104), a first movement adjuster (105), a second landmark recognizer (106), and a second movement adjuster (107). The moving mechanism (103) moves the main body (101, 601). The sensor (102) detects a distance and a direction to an object around the main body (101, 601). The recognizer (104) recognizes a landmark based on a detection result of the sensor (102). The first movement adjuster (105) controls the moving mechanism (103) such that the main body (101, 601) is moved to a target position based on the landmark. If the distance to the landmark has become smaller than a first threshold, the second landmark recognizer (106) recognizes a second landmark. The second movement adjuster (107) controls the moving mechanism (103) such that the main body (101, 601) is moved to the target position based on the second landmark.

## Description

### FIELD

The embodiments discussed herein are directed to a mobile unit, a method of moving a mobile unit, a robot system, and a method of producing a processed product.

### BACKGROUND

Japanese Patent No. 4962742 discloses a technique for allowing a mobile unit to autonomously run, in which landmarks are provided in the environment in which the mobile unit moves, and a laser scanner sensor mounted on the mobile unit detects the positions of the landmarks so that the mobile unit runs based on the detected position.

However, when a mobile unit autonomously runs based on the detected landmark, the mobile unit may not be able to stably detect the landmark depending on the relative positions of the landmark and the mobile unit. This is the problem in the operation of mobile units.

An aspect of embodiments has been made in light of the foregoing and aims to provide a mobile unit with improved flexibility in operation, a method of moving a mobile unit, a robot system, and a method of producing a processed product.

### SUMMARY

A mobile unit according to an aspect of embodiments includes a main body, a moving mechanism, a sensor, a recognizer, a first movement adjuster, a second landmark recognizer, and a second movement adjuster. The moving mechanism moves the main body. The sensor detects a distance and a direction to an object around the main body. The recognizer recognizes a landmark present around the main body based on a detection result of the sensor. The first movement adjuster controls the moving mechanism such that the main body is moved to a target position based on a distance and a direction to the landmark recognized by the recognizer. If the distance to the recognized landmark has become smaller than a preset first threshold, the second landmark recognizer recognizes a second landmark different from the landmark. The second movement adjuster controls the moving mechanism such that the main body is moved to the target position based on a distance and a direction to the second landmark recognized by the second landmark recognizer.

An aspect of embodiments can provide a mobile unit with improved flexibility in operation, a method of moving a mobile unit, a robot system, and a method of producing a processed product.

### BRIEF DESCRIPTION OF DRAWINGS

FIG. 1 is a perspective view of a mobile unit according to a first embodiment.
FIG. 2 is a diagram illustrating an environment in which the mobile unit according to the first embodiment moves.
FIG. 3 is a diagram illustrating landmarks according to the first embodiment.
FIG. 4 is a block diagram illustrating a configuration of the mobile unit according to the first embodiment.
FIG. 5 is a diagram for explaining how the mobile unit recognizes the landmarks.
FIG. 6 is a diagram for explaining how the mobile unit recognizes the landmarks.
FIG. 7 is a flowchart illustrating a moving process according to the first embodiment.
FIG. 8 is a diagram illustrating a robot system according to a second embodiment.
FIG. 9 is a block diagram illustrating a configuration of the mobile unit according to the second embodiment.

### DESCRIPTION OF EMBODIMENTS

Embodiments of a mobile unit, a method of moving a mobile unit, a robot system, and a method of producing a processed product disclosed in the present application will be described in details below with reference to the accompanying drawings. Note that the invention is not limited by the embodiments described below.

### First Embodiment

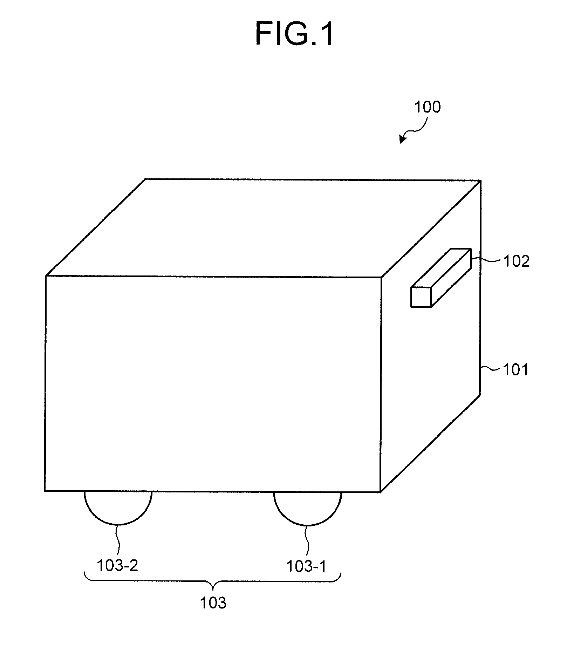

FIG. 1 is a perspective view of a mobile unit 100 according to a first embodiment. The mobile unit 100 illustrated in FIG. 1 moves based on a second landmark even in a state in which a target position is so close to a first landmark that the first landmark is positioned in a dead zone of the sensor. This enables the mobile unit 100 to approach the target position.

The first and second landmarks thus can be placed near the target position for the mobile unit 100, thereby improving the flexibility in placing landmarks. The mobile unit 100 can approach closer to the landmarks, so that the moving range of the mobile unit 100 can be increased, thereby further improving the flexibility in operation of the mobile unit 100.

The details of the mobile unit 100 illustrated in FIG. 1 are described below. The mobile unit 100 according to the present embodiment includes a main body 101, a sensor 102, and a moving mechanism 103.

The main body 101 is a housing formed of, for example, metal or plastic. The main body 101 accommodates a control mechanism therein, for example, for controlling the sensor 102 and the moving mechanism 103. The details of the control mechanism will be described later. Articles may be loaded on the main body 101. For example, the main body 101 may accommodate articles therein. Alternatively, the main body 101 may include a stage (not illustrated) that can carry articles on the top.

The sensor 102 is placed on a side surface of the main body 101. The sensor 102 detects a distance and a direction to an object around the main body 101. The sensor 102 is, for example, a laser distance sensor (distance/direction detector) having a laser oscillator such as a semiconductor laser.

The moving mechanism 103 is a moving mechanism for moving the main body 101. In the example in FIG. 1, the mobile unit 100 includes a plurality of wheels 103-1, 103-2, ... as the moving mechanism 103.

Although the moving mechanism 103 is a plurality of wheels 103-1, 103-2, ... in the present embodiment, the moving mechanism 103 may be a single wheel or a moving mechanism other than wheels. Examples of the moving mechanism other than wheels include crawlers and legs.

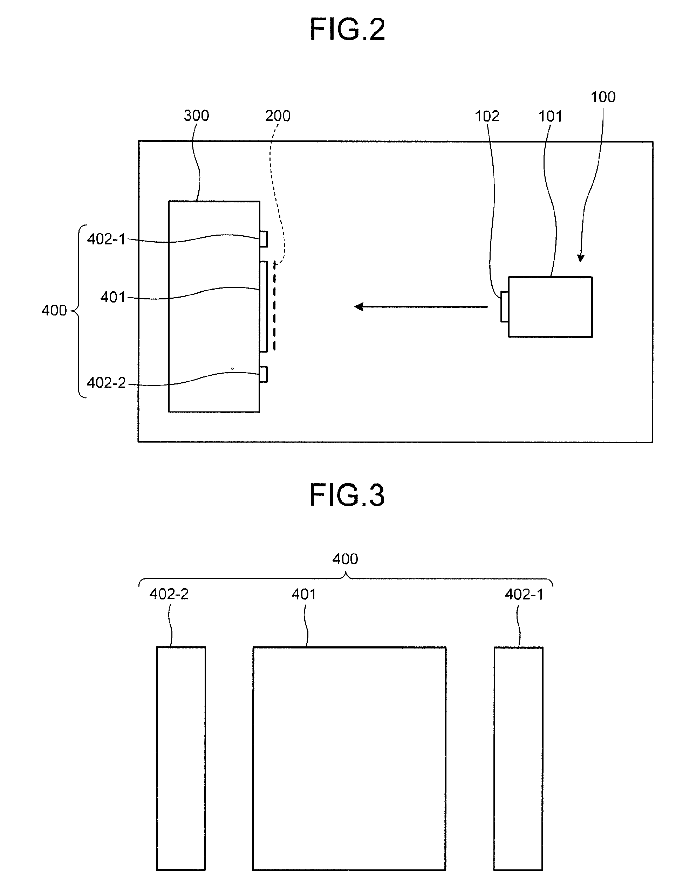

An environment in which the mobile unit 100 moves will be described with reference to FIG. 2. FIG. 2 is a diagram illustrating an environment in which the mobile unit 100 according to the first embodiment moves. FIG. 2 corresponds to the top view of the environment.

As illustrated in FIG. 2, a workstation 300 and a plurality of landmarks 401, 402-1, 402-2 are placed in the environment in which the mobile unit 100 moves. The landmarks 401, 402-1, 402-2 are also collectively referred to as landmarks 400.

The mobile unit 100 detects the distance and the direction to at least one of the landmarks 401, 402-1, 402-2 with the sensor 102. The mobile unit 100 moves so as to approach the workstation 300 based on the detection result. Specifically, the mobile unit 100 moves in the direction of the arrow illustrated in FIG. 2 and stops when reaching a target position 200.

The details of the landmarks 401, 402-1, 402-2 are described with reference to FIG. 2 and FIG. 3. FIG. 3 is a diagram illustrating the landmarks 400. FIG. 3 corresponds to the side view of the landmarks.

As illustrated in FIG. 3, the first landmark 401 has a flat plate shape. The first landmark 401 has a surface with a predetermined height and width. The surface of the first landmark 401 is formed of a material that reflects light in every direction independently of the incident direction of a laser beam emitted from the sensor 102. Examples of the material used for forming the surface of the first landmark 401 include paper and resins. The first landmark 401 is affixed to a wall surface of the workstation 300 as illustrated in FIG. 2.

Returning to FIG. 3, the explanation of the landmarks is continued. The second landmarks 402-1, 402-2 are arranged at a predetermined distance from each other on both sides of the first landmark 401. The second landmarks 402-1, 402-2 are also collectively referred to as the second landmarks 402.

The second landmarks 402-1, 402-2 each have a flat plate shape. The second landmarks 402-1, 402-2 each have a surface smaller than the first landmark 401. Each surface of the second landmarks 402 is formed of a material that reflects light in every direction independently of the incident direction of a laser beam emitted from the sensor 102. Examples of the material used for forming the surfaces of the second landmarks 402 include paper and resins. The second landmarks 402 are affixed to the wall surface of the workstation 300 as illustrated in FIG. 2.

Although the landmarks 400 illustrated in FIG. 2 have a predetermined thickness, the thickness of the landmarks 400 may be reduced by forming them with a thin material such as paper.

A plurality of third landmarks different from the landmarks 400 may be placed between the first landmark 401 and the second landmark 402-1 and between the first landmark 401 and the second landmark 402-2. In this case, the third landmarks each have a flat plate shape. The third landmarks each have a surface smaller than the first landmark 401. The surface of each of the third landmarks is formed of, for example, a material that regularly reflects light. The third landmarks are affixed to the wall surface of the workstation 300.

In this case, the landmarks may be integrally formed. For example, the landmarks may be integrally formed by printing them on a sheet-like flat plate such as paper. Alternatively, the landmarks may be integrally formed by affixing a flat plate-like material that regularly reflects light as third landmarks to a flat plate of the same material such as paper.

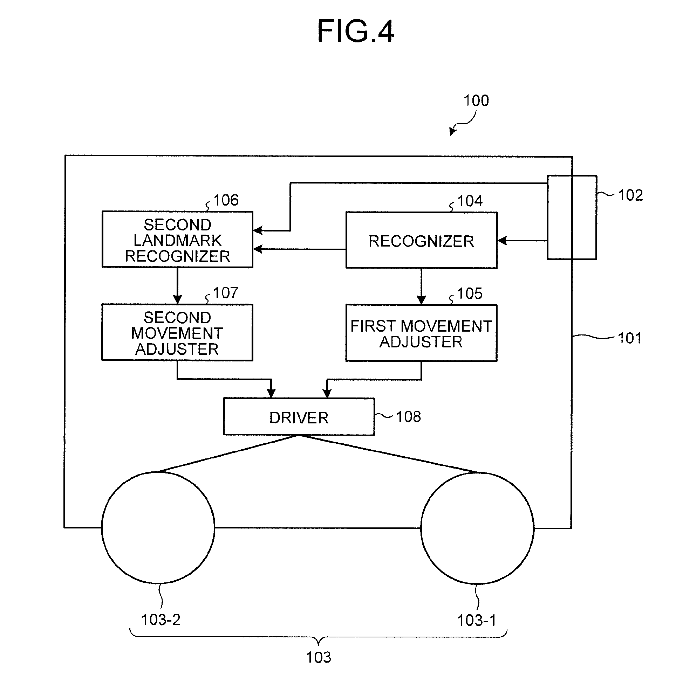

The details of the mobile unit 100 according to the present embodiment will be described with reference to FIG. 4. FIG. 4 is a block diagram illustrating a configuration of the mobile unit 100. The mobile unit 100 includes a recognizer 104, a first movement adjuster 105, a second landmark recognizer 106, a second movement adjuster 107, and a driver 108, as a control mechanism in the inside of the main body 101.

The recognizer 104 recognizes the first landmark 401 present around the main body 101 based on the detection result of the sensor 102. The recognizer 104 notifies the first movement adjuster 105 of the distance and the direction to the recognized first landmark 401.

If the distance to the first landmark 401 is smaller than a first threshold TH1, the recognizer 104 notifies the second landmark recognizer 106 that the distance to the first landmark 401 has become smaller than the first threshold TH1.

The first movement adjuster 105 controls the moving mechanism 103 such that the main body 101 is moved to the target position 200 based on the distance and the direction to the first landmark 401 recognized by the recognizer 104. Specifically, the first movement adjuster 105 notifies the driver 108 of the direction and the distance of movement of the main body 101. The first movement adjuster 105 thus controls the moving mechanism 103 through the driver 108.

If the distance to the first landmark 401 recognized by the recognizer 104 has become smaller than the preset first threshold TH1, the second landmark recognizer 106 recognizes the second landmarks 402 different from the first landmark 401.

Specifically, the second landmark recognizer 106 acquires the detection result of the sensor 102 if the notice that the distance to the first landmark 401 has become smaller than the first threshold TH1 is received from the recognizer 104.

The second landmark recognizer 106 recognizes the second landmarks 402 based on the detection result of the sensor 102. The second landmark recognizer 106 notifies the second movement adjuster 107 of the distances and directions to the recognized second landmarks 402.

The second movement adjuster 107 controls the moving mechanism 103 such that the main body 101 is moved to the target position 200 based on the distances and directions to the second landmarks 402 recognized by the second landmark recognizer 106.

Specifically, the second movement adjuster 107 notifies the driver 108 of the direction and the distance of movement of the main body 101. The second movement adjuster 107 thus controls the moving mechanism 103 through the driver 108.

The driver 108 includes a motor (not illustrated) for driving the wheels 103-1, 103-2, ... The driver 108 drives the wheels 103-1, 103-2, ... based on the direction and the distance of movement of the main body 101 that is given from the first movement adjuster 105 or the second movement adjuster 107.

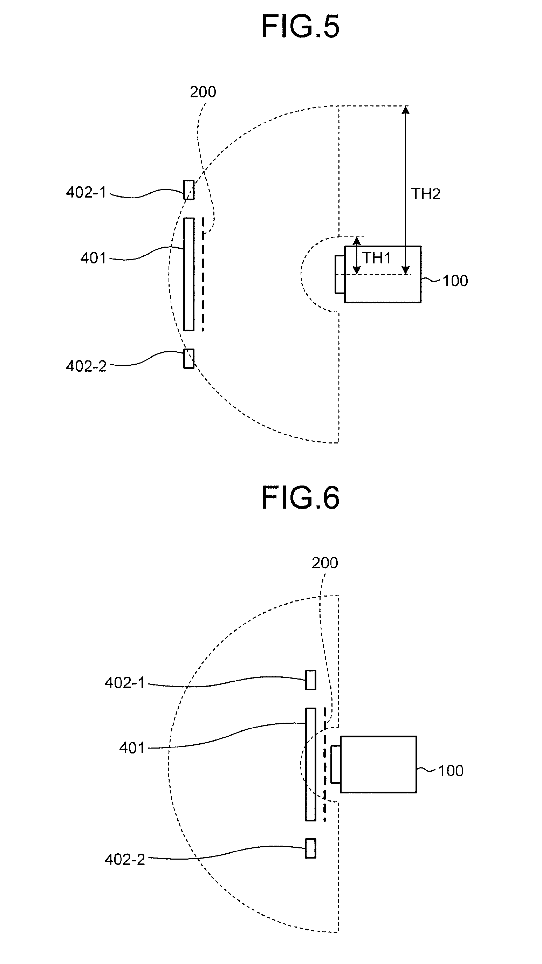

The operation of the mobile unit 100 will be described with reference to FIG. 5 and FIG. 6. FIG. 5 is a diagram illustrating how the mobile unit 100 detects the landmarks 400.

The sensor 102 is a laser distance sensor. The sensor 102 emits a laser beam and detects the distance to an object from the time taken for the laser beam to be reflected on the object and return. The sensor 102 also detects the direction to an object from the direction in which a laser beam is emitted.

The sensor 102 detects the distance and the direction to an object in a predetermined search angle range by emitting a laser beam at intervals of a predetermined angle (for example, 0.5 degree) in the horizontal direction. The sensor 102 detects the distance and the direction to an object present between the first threshold TH1 and a second threshold TH2 (TH1 < TH2) by scanning the object with a laser beam.

The effective search range (the range in which detection of distance and direction is effective) of the sensor 102 is therefore a plane shaped like a circular sector, whose central angle equals the search angle, that is parallel to the plane (horizontal) on which the sensor 102 is placed.

The sensor 102 will fail to effectively detect the distance and the direction to an object present closer than the first threshold TH1. The sensor 102 thus has a sector-shaped dead zone, whose radius equals to the first threshold TH1 and whose central angle equals the search angle, that is parallel to the plane (horizontal) on which the sensor 102 is placed.

How the mobile unit 100 moves based on the detection result of the sensor 102 will be described.

First, as illustrated in FIG. 5, a case where the mobile unit 100 is distant from the target position 200 is described. In this case, the distance from the mobile unit 100 to the second landmarks 402 is equal to or greater than the second threshold TH2. The distance from the mobile unit 100 to the first landmark 401 is smaller than the second threshold TH2.

In this case, the first landmark 401 is included in the effective search range of the sensor 102, and the second landmarks 402 are not included in the effective search range, so that the recognizer 104 of the mobile unit 100 recognizes the first landmark 401. The mobile unit 100 then moves to the target position 200 based on the distance and the direction to the first landmark 401.

Next, a case where the mobile unit 100 moves based on the first landmark 401 and then approaches the landmarks 400 is discussed. It is assumed that the landmarks 400 eventually enter the effective search range of the sensor 102. In this case, the mobile unit 100 recognizes the first landmark 401 and moves to the target position 200 based on the distance and the direction to the first landmark 401.

A case where the mobile unit 100 approaches closer to the landmarks 400 will be described with reference to FIG. 6. The mobile unit 100 moves based on the first landmark 401 and then approaches closer to the landmarks 400.

As a result, the distance between the first landmark 401 and the sensor 102 becomes smaller than the first threshold TH1. The first landmark 401 then enters the dead zone of the sensor 102, so that the mobile unit 100 becomes unable to recognize the first landmark 401. However, the mobile unit 100 has not yet reached the target position 200 and has to move to the target position 200.

In the present embodiment, therefore, the mobile unit 100 recognizes the second landmarks 402 and moves based on the second landmarks 402 after the first landmark 401 enters the dead zone of the sensor 102 and becomes unable to be recognized.

In this manner, even when the second landmarks 402 cannot be recognized, the mobile unit 100 can move to the target position 200 based on the first landmark 401 as long as the first landmark 401 can be recognized. Even when the first landmark 401 cannot be recognized, the mobile unit 100 can move to the target position 200 based on the second landmarks 402 as long as the second landmarks 402 can be recognized.

When the mobile unit 100 fails to recognize the landmarks 400 because the distance between the first landmark 401 and the sensor 102 is equal to or greater than the second threshold TH2, the mobile unit 100 may move based on another landmark (not illustrated). Alternatively, the mobile unit 100 may be provided with another sensor (not illustrated) and move so as to approach the landmarks 400 based on information detected by such a sensor.

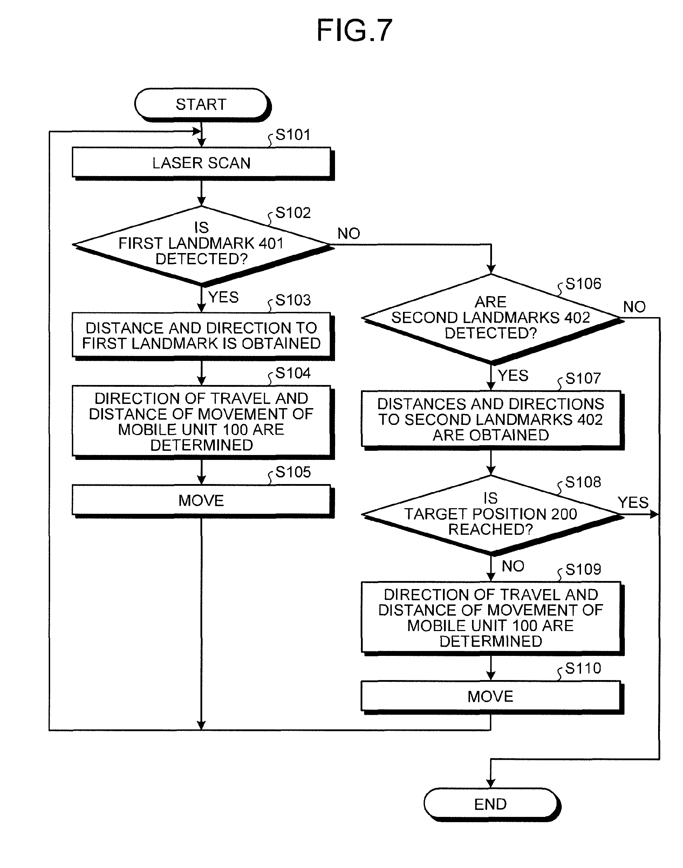

A method of moving the mobile unit 100 using the landmarks 400 will be described with reference to FIG. 4 and FIG. 7. FIG. 7 is a flowchart illustrating a process of moving the mobile unit.

First, the sensor 102 of the mobile unit 100 scans an object with a laser beam to detect the distance and the direction to the object within the search range (step S101). Next, the recognizer 104 of the mobile unit 100 determines whether the first landmark 401 has been detected, based on the detection result of the sensor 102 (step S102).

If the recognizer 104 determines that the first landmark 401 has been detected (Yes at step S102), the recognizer 104 obtains the distance and the direction to the recognized first landmark 401, assuming that the first landmark 401 has been recognized (step S103). The recognizer 104 notifies the first movement adjuster 105 of the obtained distance and direction.

Next, the first movement adjuster 105 determines the direction of travel and the distance of movement of the mobile unit 100, based on the distance and the direction to the first landmark 401 that are received from the recognizer 104 (step S104). The first movement adjuster 105 notifies the driver 108 of the determined direction of travel and distance of movement.

The driver 108 changes the orientation of the wheels 103-1, 103-2, ... based on the direction of travel and the distance of movement received from the first movement adjuster 105 and drives the wheels 103-1, 103-2, ... to move the main body 101 (step S105).

At step S102, if the recognizer 104 determines that the first landmark 401 is not detected (No at step S102), the recognizer 104 determines that the distance to the first landmark 401 has become smaller than the first threshold TH1. Next, the recognizer 104 notifies the second landmark recognizer 106 that the distance to the first landmark 401 has become smaller than the first threshold TH1.

The second landmark recognizer 106 acquires the detection result of the sensor 102 upon receiving the notice that the distance to the first landmark 401 has become smaller than the first threshold TH1 from the recognizer 104. The second landmark recognizer 106 determines whether the second landmarks 402 have been detected, based on the detection result of the sensor 102 (step S106).

If the second landmark recognizer 106 determines that the second landmarks 402 have been detected (Yes at step S106), the second landmark recognizer 106 obtains the distances and directions to the recognized second landmarks 402, assuming that the second landmarks 402 have been recognized (step S107).

If the second landmark recognizer 106 determines that the second landmarks 402 are not detected (No at step S106), the second landmark recognizer 106 assumes that the landmarks 400 are not recognized. The moving process then ends.

If the moving process ends without recognizing the landmarks 400, the mobile unit 100 may perform a process of moving, for example, based on another landmark different from the landmarks 400.

Referring back to FIG. 7, the second landmark recognizer 106, after obtaining the distances and directions to the second landmarks 402 at step S107, determines whether the target position 200 has been reached based on the obtained distances and directions (step S108).

If the second landmark recognizer 106 determines that the target position 200 has not been reached (No at step S108), the second landmark recognizer 106 notifies the second movement adjuster 107 of the distances and directions to the second landmarks 402.

The second movement adjuster 107 determines the direction of travel and the distance of movement of the mobile unit 100, based on the distances and directions to the second landmarks 402 that are received from the second landmark recognizer 106 (step S109). The second movement adjuster 107 notifies the driver 108 of the determined direction of travel and distance of movement.

The driver 108 changes the orientation of the wheels 103-1, 103-2, ... based on the direction of travel and the distance of movement received from the second movement adjuster 107 and drives the wheels 103-1, 103-2, ... to move the main body 101 (step S110).

If the second landmark recognizer 106 determines that the target position 200 has been reached (Yes at step S108), the moving process ends, and the mobile unit 100 stops.

The mobile unit 100 moves to the target position 200 by repeatedly performing the moving process. In the moving process illustrated in FIG. 7, it is determined whether the target position 200 has been reached after the distances and directions to the second landmarks 402 are obtained. However, the determination may be made after the mobile unit 100 moves at step S110.

As described above, the mobile unit 100 according to the first embodiment can move to the target position 200, which is located in proximity to the landmarks 400, by moving based on the second landmarks 402 even after the first landmark 401 enters the dead zone of the sensor 102.

The mobile unit 100 thus can approach the workstation 300 even when the landmarks 400 are placed near the workstation 300. Even when the sensor 102 has a dead zone, the mobile unit 100 can move to the target position 200 located in proximity to the landmarks 400.

When a mobile unit autonomously runs based on a detected landmark, the mobile unit may not be able to stably detect the landmark depending on the relative positions of the landmark and the mobile unit. Even in such a case, the present embodiment can improve the flexibility in operation of the mobile unit 100.

Since the size of the first landmark 401 is set larger than each of the second landmarks 402-1, 402-2, the accuracy of detecting the distance and direction to the first landmark 401 can be improved.

Since a plurality of second landmarks 402 are disposed, the accuracy of detecting the distances and directions to the second landmarks 402 can be improved although the second landmarks 402 are smaller than the first landmark 401.

Since the flat plate-shaped landmarks 400 are affixed to a side surface of the workstation 300, the landmarks 400 do not interfere with the movement of the mobile unit 100 to enable the mobile unit 100 to approach the workstation 300.

The first landmark 401 and the second landmarks 402-1, 402-2 are not necessarily limited to any particular sizes and shapes as long as the mobile unit 100 can detect the second landmarks 402-1, 402-2 in a state in which it has reached a distance too short to detect the first landmark 401. The shapes of the landmarks 400 are not limited to a flat plate.

In the present embodiment, whether or not the second landmarks 402 are recognized, the mobile unit 100 moves based on the first landmark 401 if the distance to the first landmark 401 is equal to or greater than the first threshold TH1. However, when the first landmark 401 and the second landmarks 402 can be recognized concurrently, the mobile unit 100 may move based on the two kinds of landmarks 401, 402.

In this case, for example, the second landmark recognizer 106 may determine whether the second landmarks 402 have been detected, independently of the notice from the recognizer 104. A movement adjuster may be provided, and the movement adjuster may control the moving mechanism 103 such that the main body 101 is moved to the target position 200, based on the distances and directions to the landmarks 400 that are obtained by the recognizer 104 and the second landmark recognizer 106.

As described above, since the mobile unit 100 is moved by using the first landmark 401 and the second landmarks 402 in combination, the accuracy of moving the mobile unit 100 can be improved.

### Second Embodiment

In a second embodiment, a robot system 1 is described, which includes a robot 500 placed on the mobile unit 100 according to the first embodiment and allows the robot 500 to conduct work at the workstation 300.

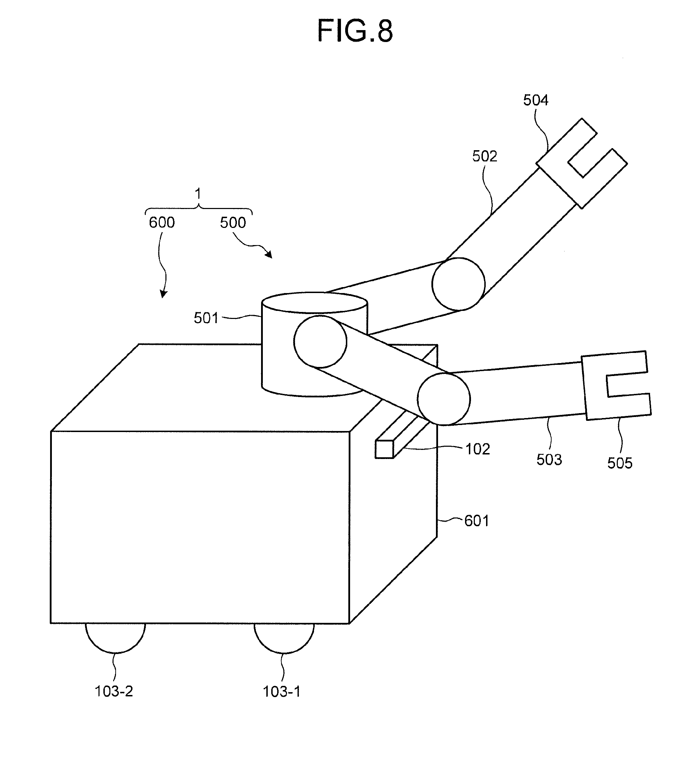

FIG. 8 is a diagram illustrating the robot system 1 according to the second embodiment. The same components as in the first embodiment are denoted with the same reference signs and will not be described in further detail.

The robot system 1 includes a mobile unit 600 and a robot 500 placed on the top of the main body 601 of the mobile unit 600. The robot 500 includes a body 501, a first arm 502, a first hand 504, a second arm 503, and a second hand 505.

Each of the first arm 502 and the second arm 503 has its base connected to the body 501. The first arm 502 and the second arm 503 are multi-degree-of-freedom arms each having a plurality of joints and links operatively controlled by servomotors.

The first hand 504 and the second hand 505 are placed at the front ends of the first arm 502 and the second arm 503, respectively. Although grippers are used as the first hand 504 and the second hand 505 in FIG. 8, for example, multi-fingered articulated hands or hands for conducting work described later may be used.

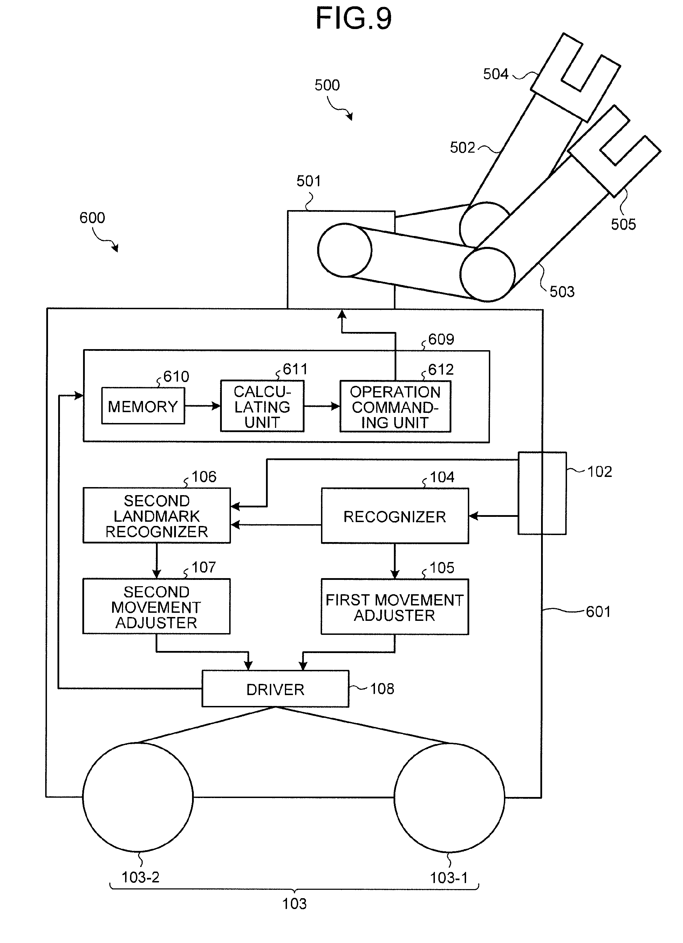

As illustrated in FIG. 9, the main body 601 of the mobile unit 600 internally includes the recognizer 104, the first movement adjuster 105, the second landmark recognizer 106, the second movement adjuster 107, and the driver 108, as a control mechanism. The main body 601 internally includes a robot operation controller 609 for controlling the operation of each joint of the robot 500 and the operation of the first hand 504 and the second hand 505.

The robot operation controller 609 has a memory 610 that stores therein an operation instruction program input beforehand for the robot 500 and a calculating unit 611 that calculates the operating mode of each servomotor of the robot 500 based on the operation instruction program stored in the memory. The robot operation controller 609 has an operation instructing unit 612 that sends an operation instruction to each servomotor based on the calculation result of the calculating unit 611.

The robot operation controller 609 is provided in the inside of the main body 601 of the mobile unit 600 but may be provided in the inside of the robot 500, for example, in the inside of the body 501.

The robot system 1 moves by use of the mobile unit 600 so as to approach the workstation 300 and conducts work by use of the robot 500. Examples of the work include moving articles loaded on the main body 601 of the mobile unit 600 to the workstation 300.

Other examples of the work include having a workpiece processed by the robot 500 at the workstation 300. In another example, the workstation 300 may process a workpiece conveyed by the robot system 1, or the robot system 1 may convey the product processed by the workstation 300.

When the robot system 1 conducts work at the workstation 300, the robot system 1 needs to approach the workstation 300 and stop at a sufficiently accurate position. The robot system 1 according to the present embodiment can approach the workstation 300 and stop at a sufficiently accurate position by moving the mobile unit 600 using both of the first landmark 401 and the second landmarks 402 in the same manner as in the first embodiment.

The robot operation controller 609 has a function of correcting an error of the position where the mobile unit 600 actually stops, from the operation instruction program stored in the memory 610. Therefore, as long as the mobile unit 600 is positioned sufficiently accurately, the robot operation controller 609 can conduct work even at the workstation 300 at a different position.

Specifically, the robot operation controller 609 can correct a minute difference of the position of the mobile unit 600 stopping in the proximity of the workstation 300 at a different position and bring the robot 500 into operation to conduct work based on the same operation instruction program, for example, if the work is the same. Here, as illustrated in FIG. 9, the robot operation controller 609 may receive the stop position of the mobile unit 600 from the driver 108.

Although the robot 500 is a dual-arm robot in the present embodiment, the robot 500 may be a single-arm robot having a single arm.

## Claims

1. A mobile unit (100, 600) comprising:
a main body (101, 601);
a moving mechanism (103) that moves the main body (101, 601);
a sensor (102) that detects a distance and a direction to an object around the main body (101, 601);
a recognizer (104) that recognizes a landmark present around the main body (101, 601) based on a detection result of the sensor (102);
a first movement adjuster (105) that controls the moving mechanism (103) such that the main body (101, 601) is moved to a target position based on a distance and a direction to the landmark recognized by the recognizer (104);
a second landmark recognizer (106) that, if the distance to the recognized landmark has become smaller than a preset first threshold, recognizes a second landmark different from the landmark; and
a second movement adjuster (107) that controls the moving mechanism (103) such that the main body (101, 601) is moved to the target position based on a distance and a direction to the second landmark recognized by the second landmark recognizer (106).

2. The mobile unit (100, 600) according to claim 1, wherein the sensor (102) measures a distance to a landmark present between the first threshold and a second threshold greater than the first threshold by scanning the landmark with a laser beam.

3. The mobile unit (100, 600) according to claim 1 or 2, wherein the second movement adjuster (107) adjusts the moving mechanism (103) based on distances to a plurality of second landmarks smaller than the landmark.

4. The mobile unit (100, 600) according to any one of claims 1 to 3, wherein the second movement adjuster (107) adjusts the moving mechanism (103) based on distances to a plurality of second landmarks disposed on both sides of the landmark.

5. The mobile unit (100, 600) according to any one of claims 1 to 4, wherein
the first movement adjuster (105) adjusts the moving mechanism (103) based on a distance to a surface of the landmark shaped like a flat plate, and
the second movement adjuster (107) adjusts the moving mechanism (103) based on a distance to a surface of the second landmark shaped like a flat plate.

6. A method of moving a mobile unit (100, 600), the method comprising:
a moving step of moving a main body (101, 601);
a sensing step of detecting a distance and a direction to an object around the main body (101, 601);
a recognition step of recognizing a landmark present around the main body (101, 601) based on a detection result at the sensing step;
a first movement adjusting step of controlling the moving step such that the main body (101, 601) is moved to a target position based on a distance and a direction to the landmark recognized at the recognition step;
a second landmark recognition step of, if the distance to the recognized landmark has become smaller than a preset first threshold, recognizing a second landmark different from the landmark; and
a second movement adjusting step of controlling the moving step such that the main body (101, 601) is moved to the target position based on a distance and a direction to the second landmark recognized at the second landmark recognition step.

7. A robot system (1) comprising:
a mobile unit (100, 600) including
a main body (101, 601),
a moving mechanism (103) that moves the main body (101, 601),
a sensor (102) that detects a distance and a direction to an object around the main body (101, 601),
a recognizer (104) that recognizes a landmark present around the main body (101, 601) based on a detection result of the sensor (102),
a first movement adjuster (105) that controls the moving mechanism (103) such that the main body (101, 601) is moved to a target position based on a distance and a direction to the landmark recognized by the recognizer (104),
a second landmark recognizer (106) that, if the distance to the recognized landmark has become smaller than a preset first threshold, recognizes a second landmark different from the landmark, and
a second movement adjuster (107) that controls the moving mechanism (103) such that the main body (101, 601) is moved to the target position based on a distance and a direction to the second landmark recognized by the second landmark recognizer (106); and
a robot (500) provided at the main body (101, 601) for moving an article loaded on the main body (101, 601).

8. A method of producing a processed product, the method comprising:
an approaching step of approaching a workstation placed near a landmark and a second landmark, the approaching step including
a moving step of moving a main body (101, 601) provided with a robot (500),
a sensing step of detecting a distance and a direction to an object around the main body (101, 601),
a recognition step of recognizing the landmark present around the main body (101, 601) based on a detection result at the sensing step,
a first movement adjusting step of controlling the moving step such that the main body (101, 601) is moved to a target position based on a distance and a direction to the landmark recognized at the recognition step,
a second landmark recognition step of, if the distance to the recognized landmark has become smaller than a preset first threshold, recognizing the second landmark different from the landmark, and
a second movement adjusting step of controlling the moving step such that the main body (101, 601) is moved to the target position based on a distance and a direction to the second landmark recognized at the second landmark recognition step; and
a processing step of having a workpiece processed by one or both of the robot (500) and the workstation.
